(19) Europäisches Patentamt
European Patent Office
Office européen des brevets

(11) EP 3 193 595 B1

(12) EUROPEAN PATENT SPECIFICATION

(45) Date of publication and mention of the grant of the patent:
**26.12.2018 Bulletin 2018/52**

(21) Application number: **15763340.5**

(22) Date of filing: **15.09.2015**

(51) Int Cl.:
***A01N 25/24*** *(2006.01)* ***A01N 25/10*** *(2006.01)*
***A01N 43/12*** *(2006.01)*

(86) International application number:
**PCT/EP2015/071143**

(87) International publication number:
**WO 2016/041997 (24.03.2016 Gazette 2016/12)**

(54) **COMPOSITION COMPRISING A HYDROGEL AND PESTICIDES**

ZUBEREITUNG ENTHALTEND EIN HYDROGEL UND PESTIZIDE

COMPOSITION COMPRENANT UN HYDROGEL ET DES PESTICIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2014 EP 14184788**

(43) Date of publication of application:
**26.07.2017 Bulletin 2017/30**

(73) Proprietor: **Novioponics B.V.**
**6132 AW Sittard (NL)**

(72) Inventors:
- **ZHOU, Ludan**
  **NL-6523 RJ Nijmegen (NL)**
- **HANSSEN, Johannes Hendrikus Leonardus**
  **NL-6523 RJ Nijmegen (NL)**
- **TWEEHUYSEN, Robert**
  **NL-6523 RJ Nijmegen (NL)**

(74) Representative: **Renkema, Jaap**
**IPecunia Patents B.V.**
**P.O. Box 593**
**6160 AN Geleen (NL)**

(56) References cited:
**EP-A1- 0 022 925**
**WO-A1-2011/007012**
**CN-A- 103 004 757**
**DE-A1-102008 032 537**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The invention is directed to a composition comprising a hydrogel and pesticides, a process for the treatment of plants with this composition, the use of the composition for the treatment of plants and plants comprising the composition.

Pesticide containing compositions for the treatment of plants are known. The pesticides are usually dispersed in a water-based medium that is sprayed on plants. The pesticides are mostly manufactured in concentrated forms by forming salts or complexes. When the water-based medium is sprayed on the plants a large part of the water-based medium will drip of the plants and is directly absorbed by the soil or the substrate. A part of the water-based medium will remain on the plant. However, this part is, over time, washed away with the rain or when the plants are watered by spraying. There is thus only a small amount of the pesticide that will remain present on the plant. To have an effective treatment of the plant with the pesticide spraying of the water-based medium with the pesticide has to be repeated frequently. A lot of the pesticide is lost to the soil which is environmentally unfriendly and the soil needs to be cleaned by purification processes.

DE102008032537 A1 discloses a viscous fluid for the treatment of plants to overcome the problem of dripping.

WO01/30145 discloses hydrogel microbeads. These can be used to immobilize agricultural chemicals; for example pesticides. Compositions comprising the microbeads may be sprayable.

The use of microbeads for the application of pesticides to plants has the disadvantage that the microbeads will not attach to the plants and will wash away with rain. Therefore the effect of the pesticides in the microbeads is not optimal.

In US2014/0121109 hydrocolloid formulations comprising an encapsulated 1-methylcyclopropene (a methylene response manipulation agent) and optionally a pesticide are disclosed. These formulations are prepared just before spraying the formulation on plants or plant parts to ensure that the formulation remains sprayable. Preparation of the formulation just before spraying has the disadvantage that only small amounts of the formulation can be prepared at once. Storage tanks for the various components of the formulation and a mixing device in combination with a backpack sprayer or a vehicle mounted sprayer are needed for the application of the formulation on the plants.

CN103004757 discloses a composition comprising deltamethrin or cyhalothrin and a temperature sensitive hydrogel. At low temperature the gel has a high viscosity, while at high temperature the gel has a much lower viscosity. EP0 022 925 discloses a herbicidal composition in the form of a suspension concentrate. The viscosity of the suspension changes depending of the temperature: at higher temperature a lower viscosity is being obtained.

DE 10 2008 032 537 discloses a herbicidal composition which has an increased viscosity at 25 celc to stick to the leaves of plants and to improve weatherability during rain.

These compositions all have an increased viscosity at lower temperature, and the function seems to be to prevent easy weathering of the herbicides by rain and spill of herbicides. These solutions do not work properly in greenhouses, since the temperature in greenhouses is generally higher than ambient temperature. Moreover, the application of the hydrogels is difficult: either one should try to spray highly viscous compositions or the compositions should be heated to lower the viscosity. Spraying heated solutions containing pesticides and herbicides can easily burn plants and inhibit plant growth.

There is a need for an improved composition for treatment of plants, which can be easily applied, shows an increased efficiency in use of pesticides.

The object of the invention is to provide an effective composition and process for treatment of plants with pesticides, to minimize the amount of pesticide needed, to minimize the spill of pesticides and therefore reduce the cost of growing plants especially in greenhouses.

The invention is characterized by a composition comprising at least one pesticide and at least one thermoreversible hydrogel having a gelling temperature, wherein at a temperature above the gelling temperature the thermoreversible gel is gelled, and at a temperature below the gelling temperature the thermoreversible gel is a liquid.

The compositions according to the invention comprise thermoreversible hydrogels that give the compositions liquid behavior at low temperatures (for example between 0 and 10 °C) and elastic gel behavior at higher temperatures (for example at a temperature between 20 and 40 °C).

This has the advantage that the viscosity of the composition is such that the composition can be sprayed at a low temperature. The thermoreversible compositions preferably are being used under circumstances where the temperature of the plants is above the gelling temperature of the thermoreversible composition. Such circumstances are present in for example greenhouses.

After spraying the composition forms a gel on the surface of the plant or plant parts and thus attaches to and remains on the plant or plant parts. In this way the drip of the composition containing pesticide will be extremely decreased.

A further advantage is that the hydrogel forms a homogenous gel layer which could cover the hydrophobic plant surface completely, while this deposition phenomenon will not happen when hydrophilic water contact the plant. Using of hydrogel could efficiently increase the contact area of pesticide and plant. Furthermore the pesticide may show slow release from the gel to the plant over a prolonged period of time or alternatively will treat the plant against diseases like for example bacteria, insects and the like. Frequent treatment of the plant is thus not necessary, or at least the frequency of the

treatments of the plants with pesticides can be reduced.

Another advantage is that by the less frequent treatment the burden on the environment is reduced. Moreover, the costs for the treatment of plants will be reduced because less of the pesticide needs to be used, and less treatment of soil or waste water is needed to clean waste water and soil from pesticide.

Another advantage is that the hydrogel kills small insects like spint on plants, thereby increasing the efficiency of the pesticides and showing a clear synergistic effect with pesticides in the treatment of plants.

## Thermoreversible hydrogel

The thermoreversible hydrogel comprises water and a polymeric compound. The polymeric compound forms a network wherein a substantial amount of water is included. The hydrogels of the present invention have a gelling temperature.

The gelling temperature typically ranges between 12 and 25 °C, preferably between 13 and 20 °C, or between 14 and 18 °C.

Below the gelling temperature the hydrogel has liquid behavior and can flow easily out of a container.

In an embodiment, the low viscosity behavior can be quantified with a low storage modulus $G'_{10}$. $G'_{10}$ is defined as the storage modulus of a composition comprising 3 mg/ml polymer in water measured at a temperature of 10 °C, with the aid of a rheometer. $G'_{10}$ is below 3 Pa, preferably below 2 Pa, more preferably below 1 Pa.

Above the gelling temperature the hydrogel shows no flow in a vial tilt test. When a glass vial which contains the gel is turned upside down, no flow of the gel is observed during 15 seconds observation time. The gelling temperature of the hydrogel is dependent on the polymer used, the concentration of the polymer and the molecular weight of the polymer. In an embodiment the high viscosity behavior, or elastic gel behavior, can be quantified with and a high $G'_{30}$ . $G'_{30}$ is defined as the storage modulus of a hydrogel comprising 3 mg/ml polymer in water measured at a temperature of 30 °C, with the aid of a rheometer. $G'_{30}$ is typically above 20 Pa, preferably above 30 Pa, or between 50 and 1000 Pa, or between 100 and 500 Pa.

The polymeric compound in the hydrogel can be chosen from various groups of polymers. The polymeric compound should at least be partly hydrophilic. Examples of polymeric compounds are polysaccharides, such as carrageenan and agar-agar, gelatin, pluronic hydrogel and Poly(*N*-isopropylacrylamide) (PNIPAm) hydrogel.

In one embodiment the polymeric compound is a diblock copolymer of the formula (1) B-A or a triblock copolymer of the formula (2) B-A-B or formula (3) A-B-A. In formula (1), (2) and (3) B stands for a hydrophobic block and A stands for a hydrophilic block.

With 'hydrophilic block' is meant that the block by itself has a solubility in water. For example polyalkyleneglycols or polyethers are hydrophilic blocks. Examples of polyalkyleneglycol are polypropyleneglycol (PPG) or polyethyleneglycol (PEG) With hydrophobic block' is meant that the block by itself has a very low solubility in water. Examples of hydrophobic blocks are polyester blocks, polyester-amide blocks, polylactide blocks (PLA), polyglycolide blocks (PGA), poly (lactide-co-glycolide) (PLGA) blocks, polycaprolactone blocks and polydioxanon blocks

In the block copolymers according to formula (1), (2) and (3) A preferably is a linear hydrophilic block, for example a linear poly-(ethylene glycol) block (PEG block).

In the block copolymers according to formula (1), (2) and (3) B preferably is a linear hydrophobic block.

Generally, the number average molecular weight (Mn) of the blocks in the block copolymer according to formula (1), (2) and (3) is at least 1000 Da, for example at least 1500 Da and/or preferably at most 8000 Da, for example at most 5000 Da. The number average molecular weight as used herein is defined as the number average molecular weight as determined using $^1$H nuclear magnetic resonance.

In another, and preferred, embodiment the polymeric compound is chosen from oligo(alkylene glycol) functionalized polyisocyanopeptides. Oligo(alkylene glycol) functionalized polyisocyanopeptides are, for example, described by Hase et al. Chem.-Asian J. 2007, 2, 755-763, Kitto et al. J. Mater Chem 2008, 18, 5615-5624 and in WO-2011007012. These polymeric compounds comprise a poly(isocyanopeptide) backbone functionalized with oligo(alkylene glycol) chains that are grafted onto the backbone and can be represented by the following formula:

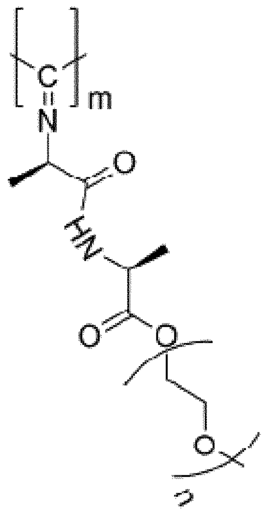

In the formula m represents the number of isocyanopeptides and can be an integer from 1-100,000 and n represents the number of alkylene glycol units and can be an integer from 1-10. In the formula two units of alanine are used as an example of the peptide part, and ethylene glycol is used as an example of alkylene glycol.
The isocyanopeptide backbone can, for example, comprise the amino acids alanine, arginine, asparagine, aspartic acid, cysteine, glutamic acid, glutamine, glycine, histidine, isoleucine, leucine, lysine, methionine, phenylalanine, proline, serine, threonine, thryptophan, tyrosine and valine.
The oligo(alkylene glycol) chains may be linear, branched or dendronized. Preferably, the oligo(alkylene glycol) chain is linear.
In oligo(alkylene glycol) oligo refers to 1-10 alkylene glycol repeating units. Examples of suitable alkylene glycols are ethylene, propylene, butylene or pentylene glycol. Preferably, the alkylene glycol is ethylene glycol.
Examples of suitable alkylene glycols are ethylene-, propylene-, butylene- or pentylene glycol. Preferably the alkylene glycol is ethylene glycol.
Advantageous oligoethyleneglycol units are depicted below. In general, the term oligo refers to a number < 10.

1 OEG 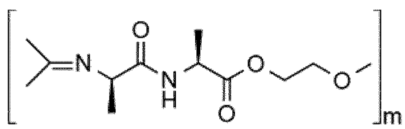

2 OEG 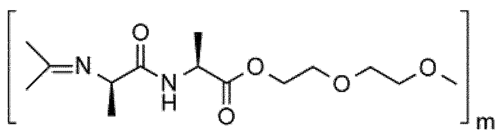

3 OEG 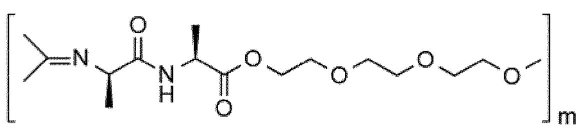

4 OEG 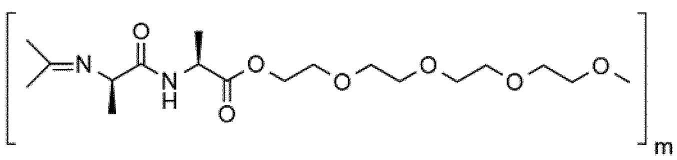

Preferably the isocyanopeptides are substituted with at least 3 ethylene glycol units to lead to water soluble materials after polymerization.
The poly(isocyanopeptide) can be a homopolymer comprising one type of isocyanopeptide functionalized with

one type of linear or non-linear oligo(alkylene glycol). The poly(isocyanopeptide) can also be a copolymer comprising two or more types of isocyanopeptide and/or two or more types of linear or non-linear oligo(alkylene glycol)s.

The polymerization is preferably performed in the presence of an apolar solvent. Suitable apolar solvents may be selected from the group consisting of saturated hydrocarbon solvents and aromatic hydrocarbon solvents or mixtures thereof. Examples of apolar solvents are pentane, hexane, heptane, 2- methylbutane, 2-methylhexane, cyclohexane, and toluene, benzene xylenes or mixtures thereof. Preferably toluene is used in the polymerization. Preferably toluene is chosen for the polymerization process of oligo(ethylene glycol) isocyanopeptides where the oligo(ethylene glycol) part contains at least three ethylene glycol units.

Preferably the polymerization is carried out in the presence of a catalyst. The catalyst is preferably a nickel(II) salt. Example of Ni(II) salts are nickel(II) halides (e.g. nickel(II) chloride), nickel(II) perchlorate or tetrakis-(tertbutylisocyanide)nickel(II) perchlorate.

Other complexes and nickel salts might be used provided that they are soluble in the polymerization medium or initially dissolved in an adequate solvent which is miscible in the polymerization medium. General references describing some catalytic systems that may be used to polymerize the oligo(alkylene glycol)isocyanopeptides may be found in Suginome M.; Ito Y; Adv Polym SC1 2004, 171 , 77-136; Nolte R. J. M.; Chem. Soc. Rev. 1994, 23(1), 11-19)]

Preferably the monomer concentration is chosen above 30 mmol/L and the catalyst/monomer ratio chosen between 1/100 and 1/10 000. Lowering the amount of nickel(II) (catalyst/monomer ratio below 1/1000) permits the preparation of materials exhibiting a substantial degree of polymerization [mean DP > 500], which is desired for subsequent application of the polymers as macro-hydrogelators.

In a representative example, a millimolar solution of monomer in a nonpolar organic solvent or mixture of solvents is added to a nickel (II) catalyst dissolved in a polar solvent in a molar ratio of 1:50 up to 1:100,000 catalyst to monomer. In a sealed environment the mixture is vigorously stirred for 2 to 24 hrs. Once completed, the reaction mixture is evaporated and the crude product is dissolved in organic solvents and precipitated in diethylether or similar non-compatible organic solvents, giving the desired product. Thermoreversible hydrogels are, for example, disclosed in WO2001/82970, WO2011/007012 and WO2012/131106.

The thermoreversible hydrogel can comprise 0.01 to 1 wt% of the polymeric compound based on the total weight of the hydrogel. Preferably, the amount of polymeric compound is 0.05 to 0.7 wt%, more preferably 0.1 to 0.5 wt%. The amount of water in the hydrogel is preferably between 99 to 99.99 wt%, preferably, 99.3 to 99.95 wt%, more preferably 99.5 to 99.9 wt%.

An advantage of the use of oligo(alkylene glycol) functionalized polyisocyanopeptides is the low concentration of polymer needed to make a hydrogel with a very high viscosity. Preferably the concentration of polymer ranges between 0.01 and 1 wt%, more preferably between 0.05 and 0.7 wt% of polymer relative to the total of the composition.

After the formation of the hydrogel the hydrogel has a certain viscosity and storage modulus G'. The viscosity and modulus are dependent on the amount of polymeric compound in the hydrogel, the molecular weight of the polymer and on the temperature of the hydrogel.

The compositions comprising the hydrogel and at least one pesticide have the unique property that at low temperatures they show a low viscosity and low storage modulus G', whereas at higher temperatures the compositions form an elastic gel, having a higher storage modulus G'. Preferably, the composition has a storage modulus $G'_{10}$ at 10 °C below 3 Pa, preferably below 2 Pa or below 1 Pa, measured at a concentration of 3 mg polymer/ ml water. At a temperature of 30 °C the storage modulus of the $G'_{30}$ is typically above 10 Pa, or above 20 Pa, or between 30 and 1000 Pa.

The concentration of the pesticide in the composition is 0-7 wt%, preferably 0.0001 - 5.0 wt% based on the total weight of the composition.

<u>Pesticide</u>

The composition according to the invention preferably comprises a pesticide. Pesticides are substances meant for attracting, seducing, destroying, or mitigating any pest. The most common use of pesticides is as plant protection products (also known as crop protection products), which in general protect plants from damaging influences such as weeds, plant diseases or insects. The term pesticide includes all of the following: herbicide, insecticide, insect growth regulator, nematicide, termiticide, molluscicide, piscicide, avicide, rodenticide, predacide, bactericide, insect repellent, animal repellent, antimicrobial, fungicide, disinfectant, and sanitizer.

Preferably the pesticide is a herbicide, an insecticide, a fungicide, a bactericide an insect growth regulator, a nematicide, a termiticide, a molluscicide, an antimicrobial, a disinfectant or a sanitizer.

In general, a pesticide is a chemical or biological agent (such as a virus, bacterium, antimicrobial, or disinfectant) that deters, incapacitates, kills, or otherwise discourages pests. Target pests can include insects, plant pathogens, weeds, mollusks, birds, mammals, fish, nematodes (roundworms), and microbes that destroy property, cause nuisance, or spread disease, or are disease vectors.

Herbicide

The composition according to the invention can comprise a herbicide. Herbicides are also known as weed killers and are used to kill unwanted plants.
Examples of herbicides are 2,4-dichlorophenoxyacetic acid (2,4-D), aminopyralid, atrazine, clethodim, chlorimuron, chlorsulfuron, clopyralid, dicamba, diclofopmethyl, glufosinate ammonium, fluazifop, fluroxyyr, glyphosate, imazapyr, imazapic, imazamox, imazaquin, imazethapyr, linuron,metsulfuron, metolachlor, paraquat, pendimethalin, picloram, primisulfuron, quizalofopethyl, rimsulfuron, sodium chlorate, sethoxydim, sulfometuron, tralkoxydim, triasulfuron, 2,4,5-trichlorophenoxyacetic acid (2,4,5-T) and triclopyr.

Insecticide

The composition according to the invention can comprise an insecticide. Insecticides are used to kill insects. Examples of insecticides are organochlorides, such as DDT; organophosphates and carbamates; pyrethroids, such as imidacloprid; neonicotinoids; ryanoids, such as rynaxypyr; insect growth regulators; plant-produced insecticides and bacterial insecticides.

Fungicide

The composition according to the invention can comprise a fungicide. Fungicides are used to kill or inhibit fungi or fungal spores.
Many fungicides comprise sulfur. Other examples of fungicides are cinnamaldehyde, citronella oil, jojoba oil, monocerin, neem oil, oregano oil, rosemary oil, the bacterium Bacillus subtilis, and the beneficial fungus Ulocladium oudemansii.

Bactericide

The composition according to the invention can comprise a bactericide. Bactericides are used to kill bacteria. Apart from bactericides bacteriostatics can also be used. Bacteriostatics are compounds that slow the growth or reproduction of bacteria. Bactericides can be disinfectants, antiseptics, or antibiotics.
Examples of bactericides are hypochlorites, chloramines, dichloroisocyanurate, chlorine dioxide, povidone-iodine, Lugol's solution, ethanol, 1-propanol, 2-propanol, 2-phenoxyethanol, 1-phenoxypropanol, 2-phenoxypropanol, phenol, cresol, hexachlorophene, triclosan, trichlorophenol, tribromophenol, pentachlorophenol, dibromol, quaternary ammonium compounds (for example benzalkonium chloride, cetyl trimethylammonium bromide, didecyldimethylammonium chloride, cetylpyridinium chloride, benzethonium chloride, chlorhexidine, glucoprotamine, octenidine dihydrochloride), ozone, permanganate solutions, silver, silver nitrate, mercury chloride, phenylmercury salts, copper sulfate, copper oxide, phosphoric acid, nitric acid, sulfuric acid, amidosulfuric acid, toluenesulfonic acid, sorbic acid, benzoic acid, lactic acid and salicylic acid, sodium hydroxide, potassium hydroxide and calcium hydroxides.

Use

The composition according to the invention can be used to treat various objects that need to be protected against insects and deceases and is normally treated with a pesticide. In one embodiment of the invention, the thermoreversible hydrogel can be used without the use of pesticides, for example in the protection of plants from Glasshouse red spider mite - *Tetranychus urticae.* In a preferred embodiment of the invention, the composition contains a thermoreversible gel and at least one pesticide.
Examples of these objects are constructions, such as houses or other buildings and in general surfaces in buildings; plants The composition can, for example, be applied by brushing, pouring, dripping and spraying. Preferably, the composition is used for the treatment of plants or plant parts in horticulture and agriculture.
The invention is also directed to the use of a thermoreversible hydrogel for the treatment of plants or plant parts.
The invention is further directed to the use of a polyisocyanopeptide functionalized with an oligo(alkylene glycol) for the treatment of plants or plant parts.

Process

The invention is further directed to a process for the treatment of plants or plant parts comprising the steps of

a) Providing a composition comprising a polymer and optionally a pesticide at a temperature between 0 and 10 °C, and wherein the composition has a gelling temperature above 10 °C where it changes from a liquid state into a gel state

b) Providing a plant having a temperature above the gelling temperature of the composition
c) Applying the composition onto the plant by way of brushing, pouring, dripping or spraying.

Because of the low viscosity and low modulus of the composition at low temperatures the composition is liquid when the composition is applied to the plants. The environments of the plants and the plant or plant parts itself have a higher temperature (for example above 18 °C, preferably in the range between 20 and 40 °C, or between 22 and 39 °C, or between 25 and 38 °C) that warms the composition such that the composition forms a gel. The gel is preferably formed on the outside of the plant or plant parts during or directly after application. Warming up of the composition can occur faster when the composition is finely divided. Therefore, the composition is preferably applied by spraying.
After growth of the plants, the hydrogel can be removed from the crop or any fruits by simply cooling the plants, or spraying with cold water. The hydrogel according to the invention is thermoreversible, which means that upon cooling the hydrogel becomes liquid again, and can be removed from the plants. This provides an additional advantage over any known method in the art.

Plant

The invention is further directed to a plant or plant part comprising the composition according to the invention.

**Figures**

Figure 1 shows the dead percentage of spider on paprika plants (example 1).
Figure 2 shows the overview of coverage pattern of water, water + Motto®, water + Hasten™ and water + NovioHelix. Tinopal® was used to visualize the coverage pattern and gives blue color under UV-light.
Figure 3 shows the coverage pattern of water versus NovioHelix. The leaf surface was treated with water or NovioHelix A) under normal light and B) under UV-light.
Figure 4 shows the drip-off after applying pesticide with water, water with Motto®, water with Hasten™ and water with NovioHelix. The drip-off of water was set to 100%. Adjuvant Motto® has no influence on drip-off. Hasten™ decreases 4% drip-off. NovioHelix decreases 20% drip-off in comparison to water.

Experiments and examples

Synthesis and polymerization of temperature sensitive hydrogels.

The synthetic temperature-sensitive hydrogels (PIC hydrogels) have been synthesized from polyisocyanopeptides grafted with oligo(ethylene glycol) side chains. To obtain these polymers, polyisocyanopeptides where synthesized by polymerization of methoxy-functionalized monomers.
Polymerization of triethylene glycol functionalized isocyano-(D)-alanyl-(L)-alanine monomer was catalysed by the addition of nickel(II), Ni(Cl2O4)2*6H2O, with a molar ratio of 1:4000. This resulted in the polymerization of the methoxy monomer.
Triethylene glycol functionalized isocyano-(D)-alanyl-(L)-alanine monomer is represented by the following formula:

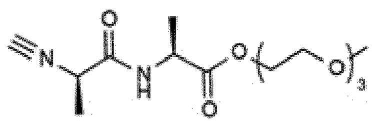

**Monomer purification**

2-(2-(2-(2- methoxyethoxy)ethoxy)ethoxy)ethyl-(L)alaninyl-(D)- isocyanoalanine (3EG) monomer was obtained from Chiralix. Previous analysis of 3EG Chiralix monomer by TLC and NMR showed some minor degradation or racemization peaks. 12g of 3EG monomer from Chiralix were purified by chromatographic column (75% DCM, 25% AcCN).

**Polymerization reaction**

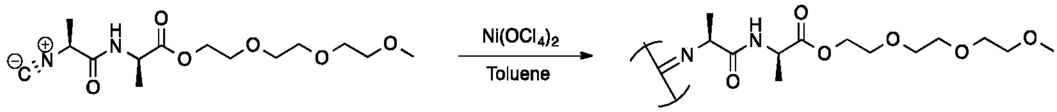


In a 500 mL round bottom flask with 10.1 g of purified 3EG Chiralix monomer were dissolved in 200 mL of freshly distilled toluene. 100 mL of $Ni(OCl_4)_2$ catalyst solution (2.93 mM, 25% EtOH and 75% Toluene. First catalyst was dissolved in EtOH followed by subsequent dilution with toluene) was prepared. 0.996 mL of $Ni(OCl_4)_2$ catalyst solution was added in one portion to the monomer solution under vigorous stirring for 1 minute after which, stirring was decreased to a moderate level and the reaction allowed to proceed at r.t. for 5 days. After 1 day, reaction the mixture became orange, with a high viscosity at which point the stirring slowed to a gentle agitation. After 4 days IR confirmed reaction was completed. There was not CN at peak at ~ 2140 cm-1, indicating complete consumption of the 3EG monomer.

**Precipitation process (repeated 3 times)**

The resulting orange reaction mixture was taken up in 300 mL of DCM and stirred with an overhead mechanical stirrer to ensure a homogeneous solution. It has been observed in previous experiments that stirring using a magnetic stirrer does not result in a homogenous solution.. After 2h of stirring gently reaction mixture was completely dissolved. A 200 mL portion of the solution in a 200mL glass syringe was added the mixture slowly drop wise into a 5 L Erlenmeyer containing 4L of diethyl ether under vigorously stirring. The entire 500 mL of the reaction mixture dissolved in DCM was precipitated in a total of 8 L of diisopropyleter. The precipitate was kept under stirring for 30 minutes and then filtered in three portions into three Buchner funnels. When all precipitate was added, filtrate was kept in the Buchner funnel (Which was connected to vacuum line) and the precipitate was dried over night. The polymer was removed from the filter paper, placed into a 500 mL round bottom flask and dried first under reduced pressure for 4h and then using a high vacuum line overnight until all the solvent was evaporated (No odor, constant weight) the polymer was obtained as an off orange powder (9.2 g, 91% yield). The polymer, it was kept in a 500 mL round bottom flask under argon atmosphere at at -18 degrees.

**Characterization.**

Rheological measurements were carried out with a stress-controlled rheometer (Discovery HR-1, TA Instruments) in an aluminium parallel plate geometry (40mm diameter) with a gap of 500 $\mu$m in a temperature-controlled environment. To probe the linear regime (G0), the sample was heated to the desired temperature, and after a short waiting period for equilibration the complex modulus G* was determined by applying an oscillating deformation of amplitude $\gamma$=0.01 in a frequency sweep of $\omega$ = 10-0.1 Hz. The nonlinear regime was studied using a pre-stress protocol, where the sample, at the desired temperature was subjected to a constant stress $\sigma_0$ with a small oscillatory stress superposed, also at $\omega$ = 10-0.1 Hz. In the pre-stress protocol that we use to probe the nonlinear mechanical regime, we apply a constant stress to the material. We did not find relaxation processes in the materials, even at high stresses.
The modulus of a viscoelastic material is called the complex modulus (G*) and consists of both the solid and liquid contribution as shown in the equation below where G' is the storage modulus (the solid contribution) and G" is the loss modules (liquid contribution).

$$G^* = \sqrt{( (G')2 + (G")2 )}$$

Stiffness of the hydrogels is determined by the solid component (G') at well defined temperatures of 10 and 30 °C.

To investigate the thermo responsive gel properties and to determine $G'_{10}$ and $G'_{30}$ the rheology of a sample comprising 3 mg/ml polymer in water was measured with a temperature ramp. Rheology measurements of the polymer used in the examples indicates a gelation point of 16 °C and a $G'_{10}$ of 1 Pa and $G'_{30}$ of 100 Pa at 30°C. Viscosity average molecular weight (Mv): 450 KDa.

**Example 1 Effectiveness of use of hydrogel.**

The objective of this experiment is to examine the effectiveness of pesticides with the use of NovioHelix as a pesticide adjuvant.

NovioHelix is the polymer of the triethylene glycol functionalized isocyano-(D)-alanyl-(L)-alanine monomer, represented by the formula:

3 OEG 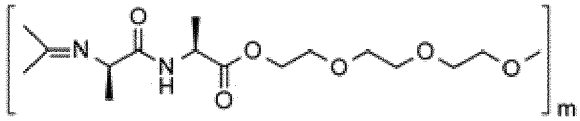

Materials and methods:

Paprika plants infected with spider mite (Tetranychus uricae) were used as experiment samples. All paprika (± 20cm) were artificially infected with spiders 5 days before the experiments. The insecticide Spiromesifen (Spiromesifen, 240g/l, Oberon) was used to against spiders. Noviohelix (3mg/mL) was used as an adjuvant. All samples were applied with pesticide until 'till run off '(the first droplet of a composition fall off the leave). The effectiveness of Spiromesifen either with or without NovioHelix was determined based on the dead percentage of spiders after treatment. The spiders both in mature and immature phases were counted before and at day 5 after experiment.

Table 1 gives an overview of the groups were made for this experiment:

| Group | Condition |
|---|---|
| 1 | without any treatment |
| 2 | Water |
| 3 | Noviohelix® only |
| 4 | Spiromesifen |
| 5 | spiromesfen + Noviohelix® |

Result:

Table 2 and figure 1 show the dead percentage of spider at day 5 after treatment. Water has a negative influence on the survival of spider. 12.7% death of spider has been observed after applying water. Noviohelix® without any insecticide shows 47.6% death. Spiromesifen gives more dead percentage with adding NovioHelix (97.7% death of spider) in comparison with Spiomesifen only (84.8% death of spider).

Table 2. The dead percentage at day 5 after treatment.

| Groups | % dead |
|---|---|
| 1. without | 18.8 |
| 2. water | 12.7 |
| 3. hydrogel | 47.6 |
| 4. Spiromesifen | 84.8 |
| 5. Spiromesifen +Noviohelix | 97.7 |

Conclusion:

The experiment shows that use of a hydrogel containing NovioHelix® as a new pesticide adjuvant increases the effectiveness of Spiromesifen against spider mite on paprika plants. NovioHelix® hydrogel surprisingly has a negative influence on the survival of spiders, even in the absence of any pesticide.

**Example 2 Coverage of plants leafs with Noviohelix hydrogel**

The objective of this study is to determine the coverage pattern of plants when they are treated with different mixtures containing water, a composition having water and ??? and a composition comprising a hydrogel having Noviohelix as an adjuvant.

Materials and methods:

Motto® is a concentrate of 263 g/l sugarderivative and modified fatty acid amine, used in combination with pesticides to improve the contact between pesticide and plant and the improvement of the uptake of the pesticide by the plants.

Hasten™, is a blend comprising esterified rape oil and an emulsifier system, to improve the contact between pesticides, insects and plant leafs and to improve the working of the pesticides against insects.

Paprika plants were used as experiment samples. The coverage of the plants was evaluated with water only, water with Motto®(Motto® 0.03%, BASF, Germany), water with Hasten (Hasten™,0.25%, Surfaplus BV, The Netherlands) and water with Noviohelix (3 mg/ml). All leaves were applied with the same amount of liquid mixture. Tinopal® was added in all of these groups to visualize the coverage pattern. Pictures were made under UV-light. The percentage of the coverage was determined with program called Image J.

Results:

Figure2 gives an overview of the coverage pattern of water, water with Motto®, water with Hasten™ and water with NovioHelix. NovioHelix shows obviously better coverage compared to water or adjuvants Motto® and Hasten™. Next to this, the coverage pattern of water versus water with NovioHelix is shown in figure 3.

The coverage percentage after adding NovioHelix (90.4%) is significantly higher compared to water only (46.4%) or Motto® (49.6%) and Hasten™ (19.2%).

Table 3. The coverage percentage.

| Group | water | water + Motto® | water + Hasten™ | water + NovioHelix |
|---|---|---|---|---|
| The percentage of coverage in % | 46,4 | 49,6 | 19,2 | 90,4 |
| SD in % | 2,1 | 1,1 | 1,6 | 1,4 |

Conclusion:

NovioHelix enhances the coverage of water extremely and gives much better cover compared to Motto® or Hasten™. This means that a more effective coverage of plants with a composition with a pesticide can be obtained, and a better protection of the paprika plants against attack of insects.

**Example 3 Drip-off of Noviohelix**

The aim of this study is to determine the reduction of drip-off with use of NovioHelix.

Materials and methods:

Paprika plants (±20cm) were used as experiment samples. The drip -off after adding NovioHelix in water was compared to water only, water with Motto® and water with Hasten™. All paprika groups (5 samples/group) were applied with 100ml liquid mixture with the same applying equipment and condition. Each paprika sample was placed in a plastic container during the experiment and will be removed after. The container was used to catch the drip-off. The difference in weight of container before and after liquid applying was indicated as drip-off.

Results:

Motto® shows no obvious difference in drip-off compared to water. Hasten™shows slightly less drip-off. NovioHelix decreases 20% drip-off compared to water (table 4 and figure4).

Table 4. The drip-off of water, water with Motto®, water with Hasten™ and water with NovioHelix.

| Groups | drip-off | SD |
|---|---|---|
| water | 100% | 0 |
| water + Motto® | 100% | 11% |
| water + Hasten™ | 96% | 8% |

(continued)

| Groups | drip-off | SD |
|---|---|---|
| water + NovioHelix | 80% | 7% |

Conclusion:

NovioHelix reduces the pesticide drip off with 20% compared to water on paprika plants. NovioHelix gives better effect on drip off compared to Motto® and Hasten™ on paprika plants.

## Claims

1. A composition comprising at least one pesticide and at least one thermoreversible hydrogel having a gelling temperature, wherein at a temperature above the gelling temperature the thermoreversible gel is gelled, and at a temperature below the gelling temperature the thermoreversible gel is a liquid.

2. The composition according to claim 1, wherein the pesticide is a herbicide, an insecticide, a fungicide, a bactericide,an insect growth regulator, a nematicide, a termiticide, a molluscicide, an antimicrobial, a disinfectant or a sanitizer.

3. The composition according to claim 1 or 2, wherein the composition has a storage modulus $G'_{10}$ at a polymer concentration of 3 mg/ml below 3 Pa measured at a temperature of 10 °C, determined with a stress-controlled rheometer (Discovery HR-1, TA Instruments) in an aluminium parallel plate geometry (40mm diameter) with a gap of 500 $\mu$m in a temperature-controlled environment, preferably a $G'_{10}$ at a polymer concentration of 3 mg/ml below 2 Pa measured at a temperature of 10 °C.

4. The composition according to anyone of claims 1-3, wherein the composition has a modulus $G'_{30}$ at a polymer concentration of 3 mg/ml of at least 20 Pa measured at a temperature of 30 °C, determined with a stress-controlled rheometer (Discovery HR-1, TA Instruments) in an aluminium parallel plate geometry (40mm diameter) with a gap of 500 $\mu$m in a temperature-controlled environment, preferably a modulus $G'_{30}$ at a polymer concentration of 3 mg/ml above 30 Pa measured at a temperature of 30 °C.

5. The composition according to any one of claims 1-4, wherein the thermoreversible hydrogel comprises water and a polymeric compound.

6. The composition according to claim 5, wherein the polymeric compound comprises a oligo(alkylene glycol) functionalized polyisocyanopeptide.

7. The composition according to claim 6, wherein the alkylene glycol is ethylene glycol and oligo is at least 3.

8. The composition according to any one of claims 1-7, wherein the thermoreversible hydrogel comprises 0.01 to 1 wt% of the polymeric compound based on the total weight of the hydrogel.

9. The composition according to any one of claims 1-8, wherein the concentration of the pesticide in the composition is 0.0001 - 5.0 wt% based on the total weight of the composition.

10. Process for the treatment of plants or plant parts comprising the steps of

    a) Providing a composition according to any one of claims 1 - 9 comprising a polymer and optionally a pesticide at a temperature between 0 and 10 °C, and wherein the composition has a gelling temperature where it changes from a liquid state into a gel state, wherein the gelling temperature is between 12 and 25 °C;
    b) Providing a plant having a temperature above the gelling temperature of the composition;
    c) Applying the composition onto the plant by way of brushing, pouring, dripping or spraying;

    wherein the composition is applied to the plants or plant parts and the plants or plant parts are present in an environment with a temperature above the gelling temperature.

**11.** Process according to claim 10, wherein the composition is applied by spraying.

**12.** Use of a thermoreversible hydrogel for the treatment of plants or plant parts, wherein at a temperature above the gelling temperature the thermoreversible gel is gelled, and at a temperature below the gelling temperature the thermoreversible gel is a liquid.

**13.** The use according to claim 12, wherein the hydrogel comprises water and an oligo(alkylene glycol) functionalized polyisocyanopeptide.

**14.** Use of a composition according to any one of claims 1-9, for the treatment of plants or plant parts in horticulture and agriculture.

**15.** Plant or plant part comprising a composition according to any one of claims 1-9.

## Patentansprüche

**1.** Zusammensetzung, umfassend mindestens ein Pestizid und mindestens ein thermoreversibles Hydrogel mit einer Gelierungstemperatur, wobei bei einer Temperatur über der Gelierungstemperatur das thermoreversible Gel geliert ist und bei einer Temperatur unter der Gelierungstemperatur das thermoreversible Gel eine Flüssigkeit ist.

**2.** Zusammensetzung nach Anspruch 1, wobei das Pestizid ein Herbizid, ein Insektizid, ein Fungizid, ein Bakterizid, ein Insektenwachstumsregulator, ein Nematizid, ein Termitizid, ein Molluskizid, ein Antimikrobiotikum, ein Desinfektionsmittel oder ein Sanitisierungsmittel ist.

**3.** Zusammensetzung nach Anspruch 1 oder 2, wobei die Zusammensetzung bei einer Polymerkonzentration von 3 mg/ml einen Speichermodul $G'_{10}$, gemessen bei einer Temperatur von 10 °C, von unter 3 Pa aufweist, bestimmt mit einem stressgesteuerten Rheometer (Discovery HR-1, TA Instruments) in einer Aluminium-Parallelplattengeometrie (Durchmesser 40 mm) mit einem Spalt von 500 $\mu$m in einer temperaturgesteuerten Umgebung.

**4.** Zusammensetzung nach einem der Ansprüche 1 bis 3, wobei die Zusammensetzung bei einer Polymerkonzentration von 3 mg/ml einen Modul $G'_{30}$, gemessen bei einer Temperatur von 30 °C, von mindestens 20 Pa aufweist, bestimmt mit einem stressgesteuerten Rheometer (Discovery HR-1, TA Instruments) in einer Aluminium-Parallelplattengeometrie (Durchmesser 40 mm) mit einem Spalt von 500 $\mu$m in einer temperaturgesteuerten Umgebung.

**5.** Zusammensetzung nach einem der Ansprüche 1 bis 4, wobei das thermoreversible Hydrogel Wasser und eine polymere Verbindung umfasst.

**6.** Zusammensetzung nach Anspruch 5, wobei die polymere Verbindung ein Oligo(alkylenglycol)-funktionalisiertes Polyisocyanopeptid umfasst.

**7.** Zusammensetzung nach Anspruch 6, wobei das Alkylenglycol Ethylenglycol und Oligo mindestens 3 ist.

**8.** Zusammensetzung nach einem der Ansprüche 1 bis 7, wobei das thermoreversible Hydrogel, basiert auf dem Gesamtgewicht des Hydrogels, 0,01 bis 1 Gew.-% der polymeren Verbindung umfasst.

**9.** Zusammensetzung nach einem der Ansprüche 1 bis 8, wobei die Konzentration des Pestizids in der Zusammensetzung, basiert auf dem Gesamtgewicht der Zusammensetzung, 0,0001 bis 5,0 Gew.-% ist.

**10.** Verfahren zur Behandlung von Pflanzen oder Pflanzenteilen, umfassend die Schritte:

a) Bereitstellen einer Zusammensetzung nach einem der Ansprüche 1 bis 9, umfassend ein Polymer und wahlweise ein Pestizid bei einer Temperatur zwischen 0 und 10 °C und wobei die Zusammensetzung eine Gelierungstemperatur aufweist, bei der sie von einem flüssigen Zustand in einen Gelzustand wechselt, wobei die Gelierungstemperatur zwischen 12 und 25 °C ist;
b) Bereitstellen einer Pflanze mit einer Temperatur über der Gelierungstemperatur der Zusammensetzung;
c) Aufbringen der Zusammensetzung auf die Pflanze durch Bürsten, Gießen, Tropfen oder Sprühen,

wobei die Zusammensetzung auf die Pflanzen oder Pflanzenteile aufgebracht wird und die Pflanzen oder Pflanzenteile sich in einer Umgebung mit einer Temperatur über der Gelierungstemperatur befinden.

**11.** Verfahren nach Anspruch 10, wobei die Zusammensetzung durch Sprühen aufgebracht wird.

**12.** Benutzung eines thermoreversiblen Hydrogels zur Behandlung von Pflanzen oder Pflanzenteilen, wobei das thermoreversible Gel bei einer Temperatur über der Gelierungstemperatur geliert ist und das thermoreversible Gel bei einer Temperatur unter der Gelierungstemperatur eine Flüssigkeit ist.

**13.** Benutzung nach Anspruch 12, wobei das Hydrogel Wasser und ein Oligo(alkylenglycol)-funktionalisiertes Polyisocyanopeptid umfasst.

**14.** Benutzung einer Zusammensetzung nach einem der Ansprüche 1 bis 9 zur Behandlung von Pflanzen oder Pflanzenteilen im Gartenbau und in der Landwirtschaft.

**15.** Pflanze oder Pflanzenteil, umfassend eine Zusammensetzung nach einem der Ansprüche 1 bis 9.

**Revendications**

**1.** Composition comprenant au moins un pesticide et au moins un hydrogel thermoréversible ayant une température de gélification, dans laquelle à une température au-dessus de la température de gélification le gel thermoréversible est gelé, et à une température au-dessous de la température de gélification le gel thermoréversible est un liquide.

**2.** Composition selon la revendication 1, dans laquelle le pesticide est un herbicide, un insecticide, un fongicide, un bactéricide, un régulateur de croissance d'insecte, un nématicide, un termiticide, un molluscicide, un anti-microbien, un désinfectant ou un agent de désinfection.

**3.** Composition selon la revendication 1 ou 2, dans laquelle la composition a un module de stockage $G'_{10}$ à une concentration depolymère de 3 mg/ml au-dessous de 3 Pa mesuré à une température de 10 °C, déterminé avec un rhéomètre contrôlé pour le stress (Discovery HR-1, TA Instruments) dans une géométrie de plaque parallèle en aluminium (40 mm de diamètre) avec un espace libre de 500 $\mu$m dans un environnement contrôlé pour la température.

**4.** Composition selon l'une quelconque des revendications 1 à 3, dans laquelle la composition a un module $G'_{30}$ à une concentration de polymère de 3 mg/ml d'au moins 20 Pa mesuré à une température de 30 °C, déterminé avec un rhéomètre contrôlé pour le stress (Discovery HR-1, TA Instruments) dans une géométrie de plaque parallèle en aluminium (40 mm de diamètre) avec un espace libre de 500 $\mu$m dans un environnement contrôlé pour la température.

**5.** Composition selon l'une quelconque ds revendications 1 à 4, dans laquelle l'hydrogel thermoréversible comprend de l'eau et un composé polymère.

**6.** Composition selon la revendication 5, dans laquelle le composé polymère comprend un oligo(alkylène glycol) polyisocyanopeptide fonctionnalisé.

**7.** Composition selon la revendication 6, dans laquelle l'alkylène glycol est l'éthylène glycol et l'oligo est au moins 3.

**8.** Composition selon l'une quelconque des revendications 1 à 7, dans laquelle l'hydrogel thermoréversible comprend de 0,01 à 1 % en poids du composé polymère sur la base du poids total de l'hydrogel.

**9.** Composition selon l'une quelconque des revendications 1 à 8, dans laquelle la concentration du pesticide dans la composition est de 0,0001 à 5,0 % en poids sur la base du poids total de la composition.

**10.** Procédé pour le traitemnt de plantes ou de parties de plante comprenant les étapes de

a) fourniture d'une composition selon l'une quelconque des revendications 1 à 9 comprenant un polymère et éventuellement un pesticide à une température entre 0 et 10 °C, et dans lequel la composition a une température de gélification où elle change d'un état liquide à un état de gel, dans lequel la température de gélification est entre 12 et 25 °C ;

b) fourniture d'une plante ayant une température au-dessus de la température de gélification de la composition ;
c) application de la composition sur la plante par brossage, versement, égouttage ou pulvérisation ;

dans lequel la composition est appliquée aux plantes ou aux parties de plante et les plantes ou parties de plante sont présentes dans un environnement avec une température au-dessus de la température de gélification.

**11.** Procédé selon la revendication 10, dans lequel la composition est appliquée par pulvérisation.

**12.** Utilisation d'un hydrogel thermoréversible pour le traitement de plantes ou de parties de plante, dans laquelle à une température au-dessus de la température de gélification
le gel thermoréversible est gelé, et à une température au-dessous de la température de gélification le gel thermoréversible est un liquide.

**13.** Utilisation selon la revendication 12, dans laquelle l'hydrogel comprend de l'eau et un oligo(alkylène glycol) polisocyanopeptide fonctionnalisé.

**14.** Utilisation d'une composition selon l'une quelconque des revendications 1 à 9, pour le traitement de plantes ou de parties de plante en horticulture et en agriculture.

**15.** Plante ou partie de plante comprenant une composition selon l'une quelconque des revendications 1 à 9.

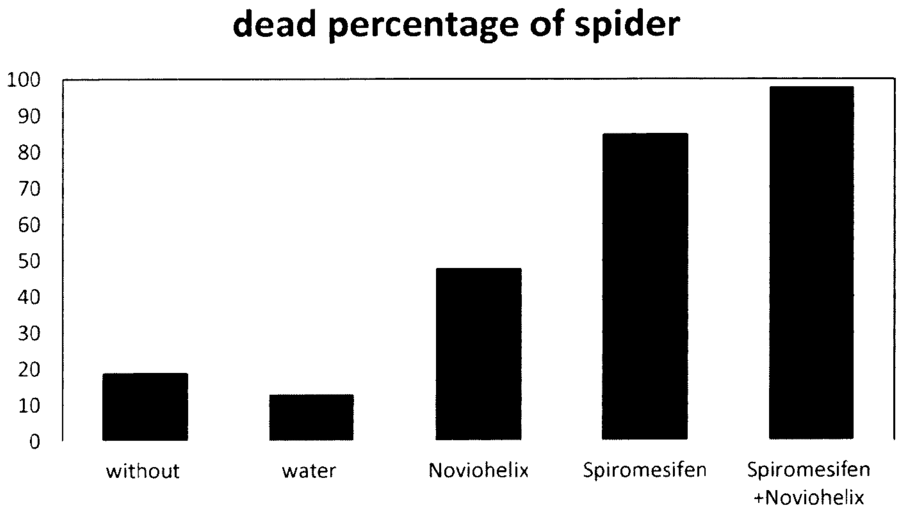


Figure 1. The dead percentage of spider (%).

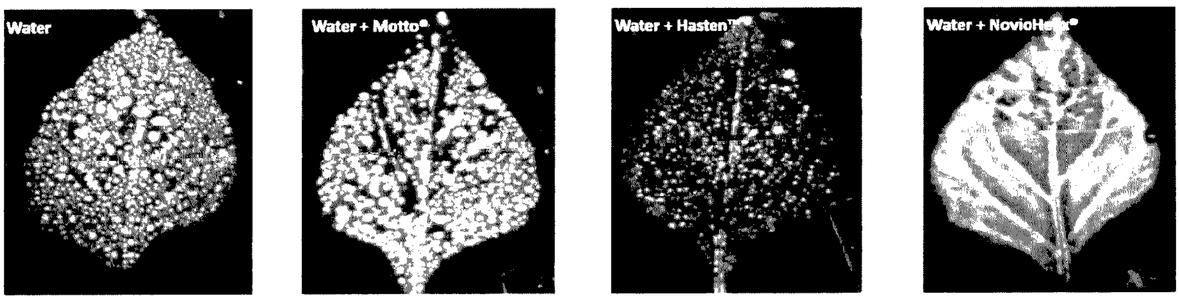


Figure 2

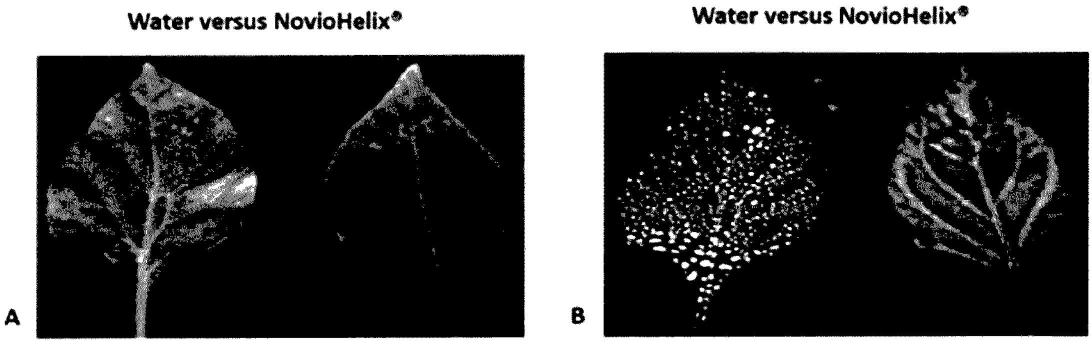


Figure 3

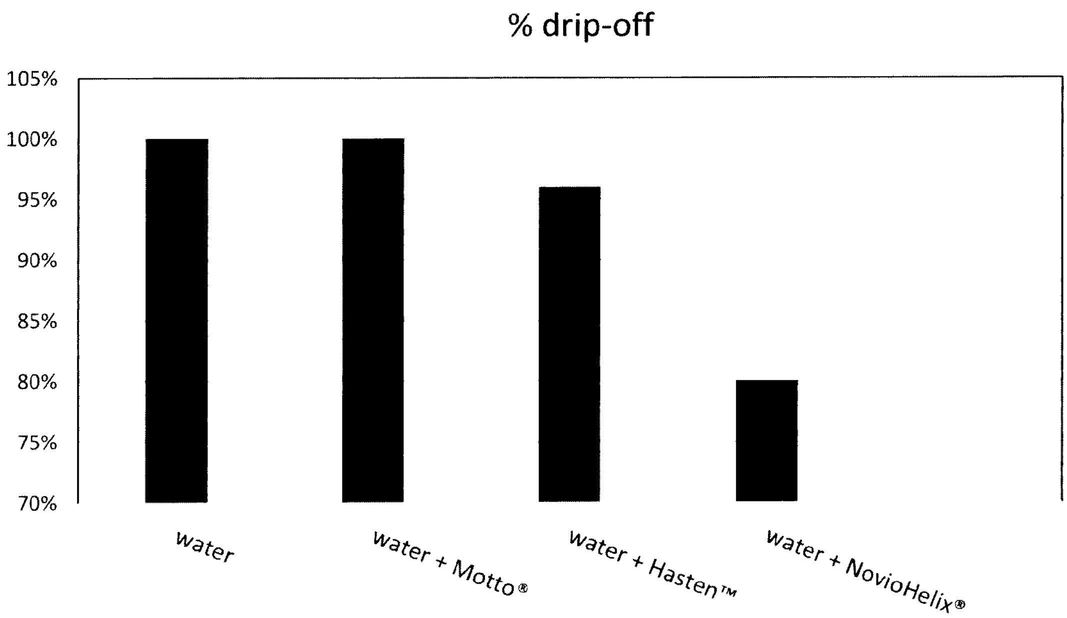


Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102008032537 A1
- WO 0130145 A
- US 20140121109 A
- CN 103004757
- EP 0022925 A
- DE 102008032537
- WO 2011007012 A
- WO 200182970 A
- WO 2012131106 A


### Non-patent literature cited in the description


- **HASE et al.** *Chem.-Asian J.,* 2007, vol. 2, 755-763
- **KITTO et al.** *J. Mater Chem,* 2008, vol. 18, 5615-5624
- **SUGINOME M. ; ITO Y.** *Adv Polym SC1,* 2004, vol. 171, 77-136
- **NOLTE R. J. M.** *Chem. Soc. Rev.,* 1994, vol. 23 (1), 11-19